# EUROPÄISCHE PATENTSCHRIFT

(11) **EP 1 177 970 B1**
(45) Veröffentlichungstag und Bekanntmachung des Hinweises auf die Patenterteilung: **04.06.2003**
(21) Anmeldenummer: 01102888.3
(22) Anmeldetag: 15.02.2001
(51) Int. Cl.: B62D 49/04

(54) **Lastkraftwagen mit einem am vorderen Ende des Rahmens angebauten Geräteträger**
Heavy vehicle with an equipment carrier mounted on the front end of the chassis
Poids lourd avec une structure porteuse d'outils montée à l'extrémité avant du chassis

(30) Priorität: 03.08.2000 AT 13472000
(43) Veröffentlichungstag der Anmeldung: 06.02.2002
(73) Patentinhaber: MAN Sonderfahrzeuge AG, 1230 Wien (AT)
(72) Erfinder: Dobisch, Alfred, 1050 Wien (AT); Beutl, Dieter, Ing., 3430 Tulln (AT); Schlegel, Christoph, 3730 Eggenburg (AT); Müllner, Heinz, Dipl.-Ing., 2346 Maria Enzersdorf (AT)

(56) Entgegenhaltungen:
- EP-A- 0 362 837
- FR-A- 2 656 017

## Beschreibung

Die Erfindung betrifft einen Lastkraftwagen mit einem am vorderen Ende des Rahmens, der mit zwei Rahmen-Längsträgern ausgerüstet ist, gebauten Geräteträger. Aus dem Dokument FR2 656 017 A ist ein Lastkraftwagen nach dem Oberbegriff des Anspruchs 1 bekannt. Bei bekannten Lastkraftwagen ist der Geräteträger in Form einer genormten Anbauplatte realisiert, die mittels zweier massiver Halter fest am Frontende des Fahrgestellrahmens angeschlossen ist. An dieser fahrzeugfesten Anbauplatte sind wahlweise verschiedene Geräte wie ein Kehrbesen, ein Mähgerät, eine Leitpfostenwaschanlage, eine Schneefräse, eine Schneeschleuder, ein Schneepflug mit oder ohne Aufsatzstreuer anzubauen. Die Anbauplatte ist dabei in einer bestimmten Höhenlage und exakt lotrecht vorn am Lastkraftwagen angebaut. Diese Vertikalausrichtung der Anbauplatte stellt in Bezug auf die Anwendung mancher Anbaugeräte nicht unbedingt ein Optimum dar. Außerdem ist die Anbauplatte als Anhänge- oder Abschleppmaul ausgebildet, was bedeutet, dass der Lastkraftwagen selbst in seiner Grundausstattung kein eigenes Abschlepp- oder Anhängemaul aufweist, weil dafür kein Platz ist oder die Zugänglichkeit zur üblichen Anbauart durch die Anbauplatte behindert ist.

Es ist daher Aufgabe der Erfindung, einen Lastkraftwagen mit Geräteträger zu schaffen, der variabler als bisherige einsetzbar ist und überdies die Verwendung eines fahrzeugeigenen Abschlepp- bzw. Anhängermauls ermöglicht.

Diese Aufgabe ist bei einem Lastkraftwagen der gattungsgemäßen Art erfindungsgemäß entsprechend dem Kennzeichen des Anspruchs 1 dadurch gelöst, dass an einer die vorderen Enden der beiden Rahmen-Längsträger oder dort befestigte Multifunktionslagerschilde miteinander verbindenden Quertraverse zwei voneinander beabstandet und höhengleich nach vorn abragende Tragarme angeordnet sind, an denen der Geräteträger um eine Horizontalquerachse schwenkbar angelenkt ist, dass der Geräteträger außerdem in einer von jener der Tragarme verschiedenen Höhenlage mittels zweier voneinander beabstandeter Lenker gegenüber rahmenfesten Lagerböcken abgestützt ist, und dass die wirksame Abstützlänge der Lenker verstellbar und so der Geräteträger außer in Vertikallage auch in eine leicht nach vorn oder hinten verschwenkte Schräglage einstellbar ist.

Die erfindungsgemäße Lösung ermöglicht eine einfache Montage und Demontage des Geräteträgers sowie dessen optimal angepasste Einstellung auch in einer von der Vertikalen verschiedenen Neigungsposition, was z. B. eine günstigere Wirkung oder besseres Arbeiten eines bestimmten Anbaugerätes bewirkt. Die erfindungsgemäße Lösung erlaubt eine unterschiedliche Anordnung des Geräteträgers entsprechend unterschiedlicher Normen, z. B. jenen der DIN 76060-A oder der ÖNORM S 2044. Ebenso ermöglicht die erfindungsgemäße Lösung das Vorsehen eines fahrzeugeigenen Abschlepp- bzw. Anhängemaules, das dann in bestimmten Einsatzfällen auch zum Mittragen besonderer am Geräteträger angebauter Lasten oder Spezialanbaugeräte herangezogen werden kann.

Nachstehend ist die erfindungsgemäße Lösung anhand dreier in der Zeichnung dargestellter Ausführungsbeispiele näher erläutert. In der Zeichnung zeigen:
- Fig. 1: in Seitenansicht den Vorderbereich eines Lastkraftwagens mit einer ersten Ausführungsform der Ausgestaltung und Befestigung eines Geräteträgers,
- Fig.2: in Seitenansicht den Vorderbereich eines Lastkraftwagens mit einer zweiten Ausführungsform der Ausgestaltung und Befestigung eines Geräteträgers,

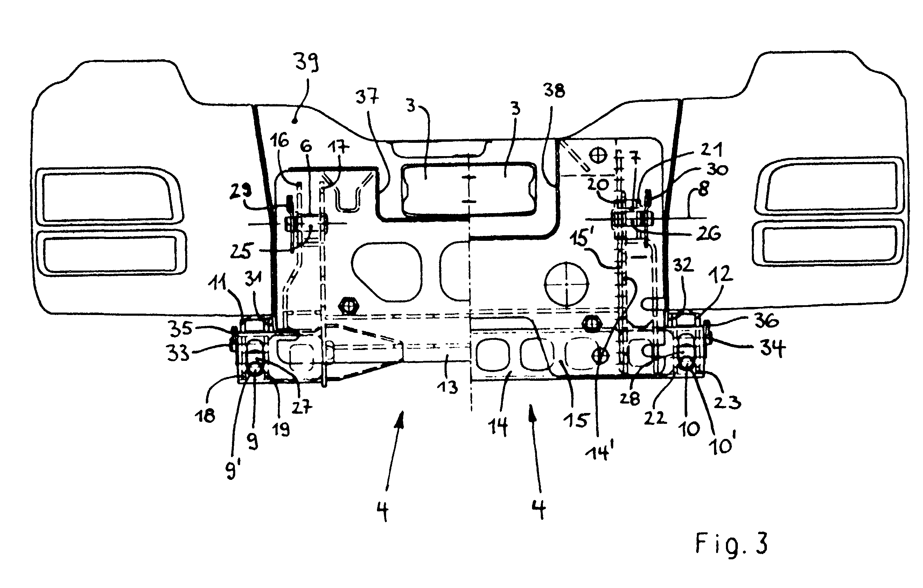

- Fig. 3: in Vorderansicht in der linken Zeichnungshälfte die Ausführungsform gemäß Fig. 1 und in der rechten Zeichnungshälfte die Ausführungsform gemäß Fig. 2,
- Fig. 4: in Seitenansicht den Vorderbereich eines Lastkraftwagens mit einer dritten Ausführungsform der Ausgestaltung und Befestigung eines Geräteträgers,
- Fig. 5: einen Vertikalschnitt durch eine obere Befestigungsstelle für den Geräteträger gemäß Fig. 4,
- Fig. 6: eine Draufsicht auf ein Höhenadapterteil des Beispiels von Fig. 4,
- Fig. 7: oben im Halbschnitt und unten in Seitenansicht das Höhenadapterteil von Fig. 6, und
- Fig. 8: perspektivisch das Höhenadapterteil von Fig. 6.

Von dem Lastkraftwagen ist in der Zeichnung nur der vordere Bereich des Fahrgestells ersichtlich. Dieses weist einen Rahmen mit zwei an verschiedenen Stellen durch Querträger miteinander verbundene Längsträger 1 auf. Jeder Längsträger 1 trägt einen an seinem vorderen Endbereich befestigten Multifunktionslagerschild 2. Die beiden Multifunktionslagerschilde 2 dienen als Halter, Stütz-, Lager- und Befestigungsorgane für eine Anzahl von Fahrzeugteilen wie Kühler/Lüfteraggregat, Fahrerhaus samt vorderer Fahrerhauslagerung, Vorderachse samt Anlenkung und/oder Federung, Unterfahrschutz etc. Im vorliegenden Fall dienen die Multifunktionslagerschilde 2 auch als Träger und Abstützorgan für ein Abschlepp- bzw. Anhängermaul 3 sowie einen Geräteträger 4.

Erfindungsgemäß sind an einer die vorderen Enden der beiden Rahmen-Längsträger 1 bzw. - wie im dargestellten Beispiel - die dort befestigten Multifunktionslagerschilde 2 miteinander verbindenden Quertraverse 5 zwei voneinander beabstandet und höhengleich nach vorn abragende Tragarme 6, 7 angeordnet, an denen der Geräteträger 4 um eine Horizontalquerachse 8 schwenkbar angelenkt ist. In einer von der Höhenlage der Tragarme 6, 7 bzw. der Horizontalquerachse 8 verschiedenen, entweder darüber oder - wie im dargestellten Fall - darunter liegenden Höhenlage ist der Geräteträger 4 mittels zweier voneinander beabstandeter Lenker 9, 10 gegenüber rahmenfesten Lagerböcken 11, 12 abgestützt. Dabei ist die wirksame Abstützlänge der Lenker 9, 10 verstellbar und so der Geräteträger 4 außer in Vertikal- bzw. lotrechter Lage auch in eine leicht nach vorn oder hinten verschwenkte Schräglage einstellbar.

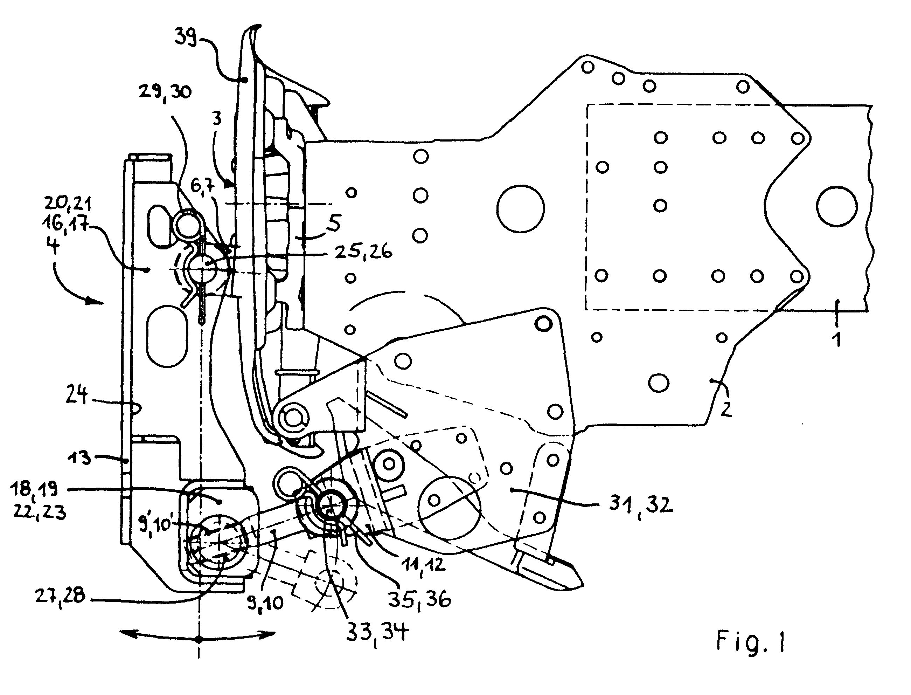

Der Geräteträger 4 weist im Beispiel gemäß Fig. 1 als Anschlussorgan für anzubauende Geräte eine Anbauplatte 13 auf, die in erfindungsgemäßer Weise wie vorstehend angegeben direkt am Lastkraftwagen angebaut ist und hinsichtlich ihrer Anbaulage und ihren Anschlussmitteln für die anzubauenden Geräte bestimmten Normvorschriften wie der DIN 76 060-A gehorcht.

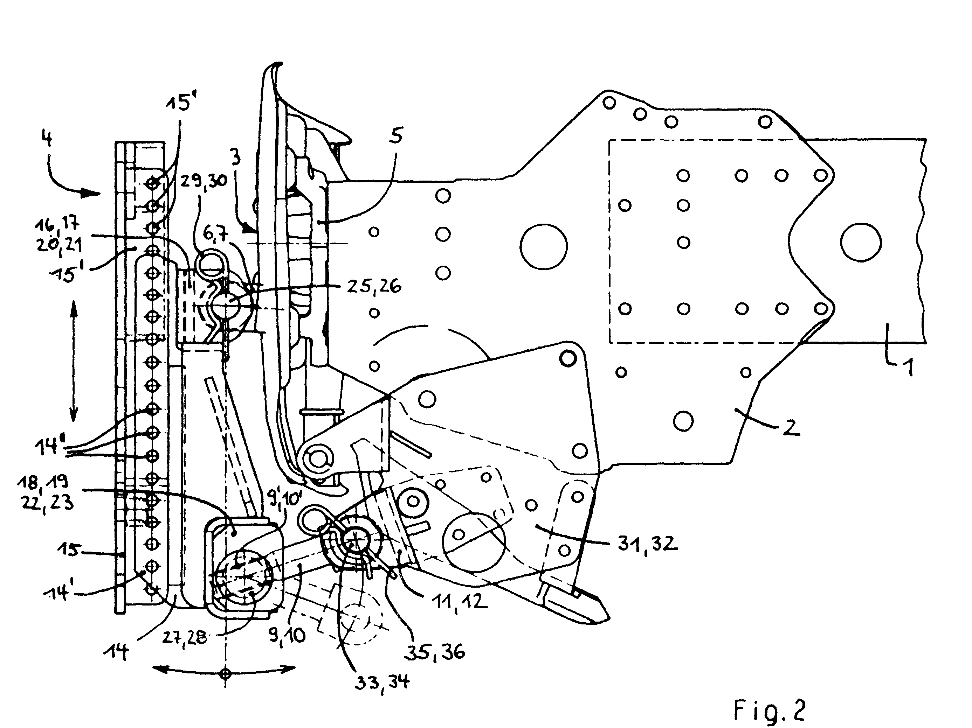

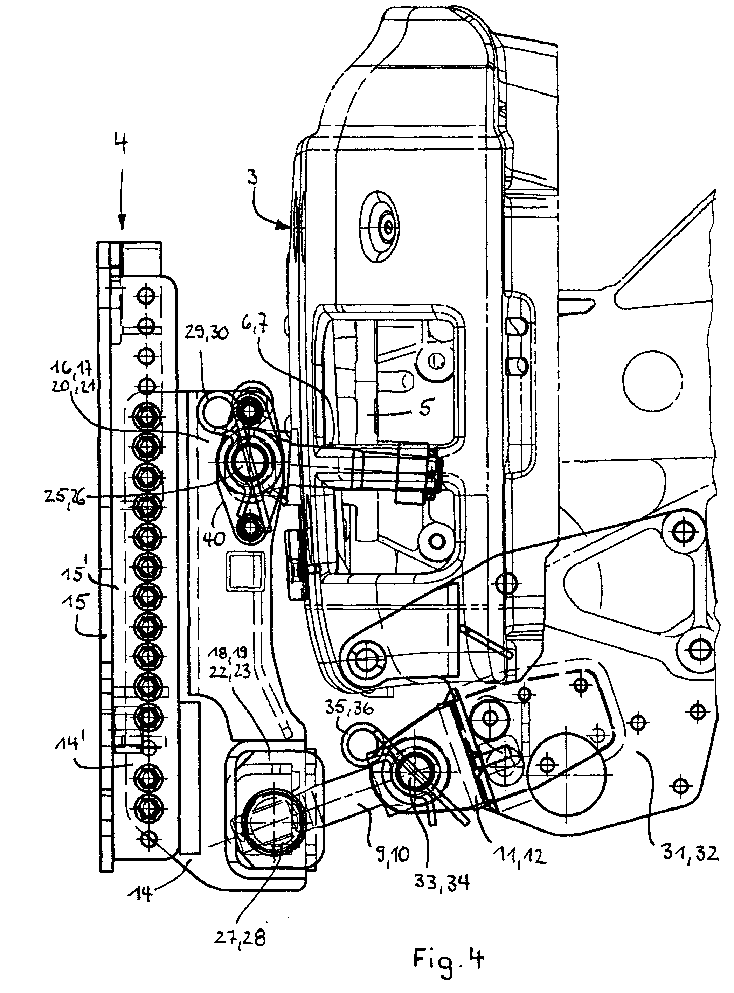

Im Fall der Beispiele gemäß Fig. 2 und 4 dagegen besteht der Geräteträger 4 im Wesentlichen aus einem in erfindungsgemäßer Art am Lastkraftwagen angeschlossenen Traggestell 14 und einer daran in verschiedenen Höhenlagen anbaubaren Anbauplatte 15, an der die verschiedenen Geräte anbaubar sind und die hinsichtlich ihrer Anbaulage und ihren Anschlussmitteln für die anzubauenden Geräte ebenfalls bestimmten, aber anderen Normvorschriften als die Anbauplatte 13, z. B. der ÖNORM S 2044, gehorcht. Für den Anschluss der Anbauplatte 15 in verschiedenen Höhenlagen am Traggestell 14 sind an zwei äußeren, vertikalen und zueinander parallelen Haltewangen 14' des Traggestells 14 und zwei äußeren Anschlusswangen 15' der Anbauplatte 15 zueinander kongruente Loch-Reihen 14" bzw. 15" vorgesehen, deren einzelne Löcher untereinander gleichen Abstand haben. Über diese Loch-Reihen 14", 15" ist die Anbauplatte 15 mit dem Traggestell 14 mittels mehrerer Bolzenoder Schraubverbindungen lösbar verbunden. Die Version von Fig. 4 unterscheidet sich von jener gemäß Fig. 2 dadurch, dass dort auch das Traggestell 14 selbst noch in verschiedenen Höhenlagen am Lastkraftwagen anbaubar ist.

Für seinen Anbau am Lastkraftwagen weist der Geräteträger 4 an jedem Seitenbereich ein oberes und ein unteres Paar paralleler Lagerschilde 16, 17 und 18, 19 bzw. 20, 21 und 22, 23 auf. Diese Lagerschilde sind im Fall gemäß Fig. 1 an der Rückseite 24 der Anbauplatte 13 befestigt, insbesondere angeschweißt. In den Beispielen gemäß Fig. 2 und 4 dagegen sind diese Lagerschild-Paare am Traggestell 14 gegeben. Dabei taucht zwischen die beiden Lagerschilde 16 und 17 bzw. 20 und 21 jedes der beiden oberen Lagerschild-Paare 16, 17 bzw. 20, 21 jeweils ein an der Quertraverse 5 angeordneter Tragarm 6 bzw. 7 seitengeführt ein und jeder Tragarm 6 bzw. 7 ist über einen Bolzen 25 bzw. 26 mit dem zugehörigen Lagerschild-Paar 16, 17 bzw. 20, 21 entweder unmittelbar oder mittelbar verbunden.

Bei der unmittelbaren Verbindung - siehe Fig. 1 und 2 - eines jeden oberen Lagerschild-Paares 16, 17 bzw. 20, 21 mit dem jeweils dazwischen aufgenommenen Tragarm 6 bzw. 7 über einen Bolzen 25, 26 sind zu dessen Aufnahme jedes obere Lagerschild-Paar 16, 17 bzw. 20, 21 und der Tragarm 6 bzw. 7 von Querbohrungen durchdrungen, welche alle mit ihrer Mittelachse koaxial zur Horizontalachse 8 fluchten. In den Beispielen gemäß Fig. 1 und 2 sind dabei die in diesen Querbohrungen aufgenommenen Bolzen 25 bzw. 26 jeweils einenendes durch einen durchmessergrößeren Bolzenkopf und andernendes durch einen Sicherungssplint 29 bzw. 30 mit zwischengefügter Beilagscheibe axial in Bezug auf das jeweilige obere Lagerschild-Paar 16, 17 bzw. 20, 21 gesichert.

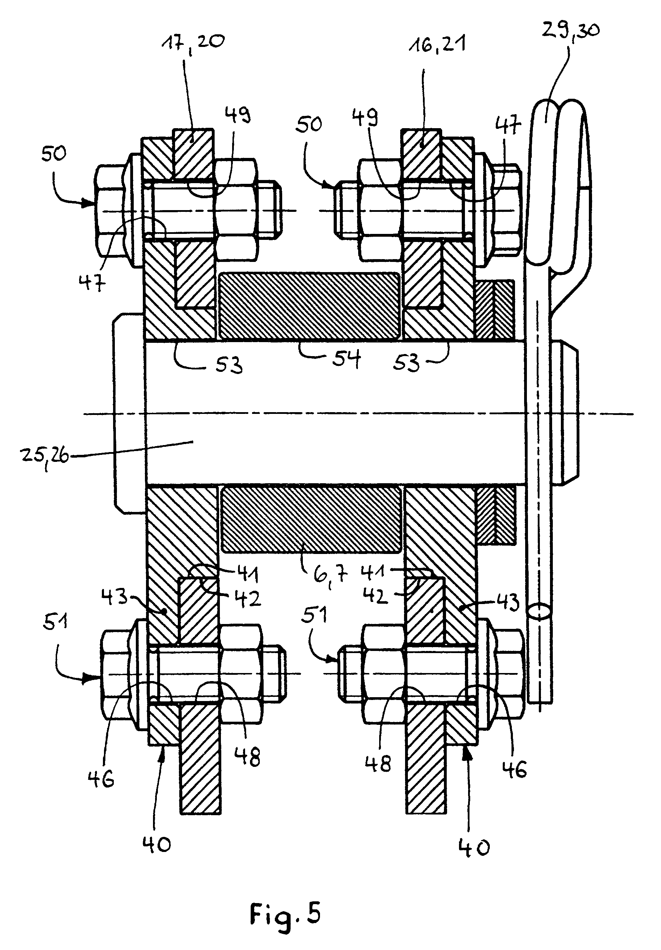

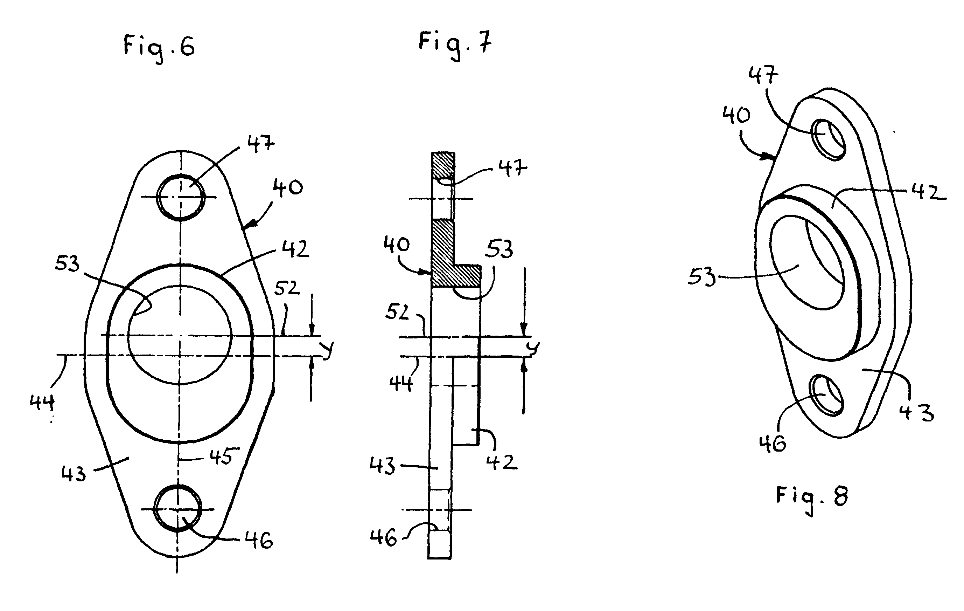

Bei der mittelbaren Verbindung eines jeden oberen Lagerschild-Paares 16, 17 bzw. 20, 21 mit dem jeweils dazwischen aufgenommenen Tragarm 6 bzw. 7 dagegen sind, wie aus dem Beispiel gemäß Figuren 4 bis 8 ersichtlich, vier identisch ausgebildete Höhenadapterteile 40 vorgesehen, je Lagerschild 16, 17, 20, 21 eines. Diese Höhenadapterteile 40 sind dahingehend konzipiert und ausgestaltet, dass der Geräteträger 4 wahlweise in einer von zwei verschiedenen Höhenlagen an den Tragarmen 6, 7 anbaubar ist. Diesem Konzept entsprechend weisen beim Beispiel gemäß Fig. 4 bis 8 alle Lagerschilde 16, 17 bzw. 20, 21 der oberen Lagerschild-Paare zueinander in einer Horizontalebene fluchtende Vertikallanglöcher 41 auf, in welch jedes ein Höhenadapterteil 40 mit einem formmäßig angepassten Vorsprung 42 formschlüssig eintaucht. Dieser Vorsprung 42 ist an einer Seite einer Anschlussplatte 43 angeordnet, die in gleichem Abstand von einer Quermittellinie 44 auf einer Vertikallinie 45 zwei Querbohrungen 46 bzw. 47 aufweist, zu denen Querbohrungen 48 bzw. 49 in den Lagerschilden 16, 17 bzw. 20, 21 der oberen Lagerschild-Paare jeweils koaxial fluchten. Über diese Querbohrungen 46, 47 und 48, 49 ist jedes Höhenadapterteil mittels einer oberen Schraubverbindung 50 und einer unteren Schraubverbindung 51 von außen her an jeweils einem Lagerschild 16, 17, 20, 21 der oberen Lagerschild-Paare lösbar befestigt. Die unterschiedliche Höhenanbaulage für den Geräteträger 4 ergibt sich dadurch, dass jeder Höhenadapterteil 40 im Bereich seines Vorsprunges 42 von einer mit ihrer Mittelachse 52 um das Maß y in Bezug auf die Quermittellinie 44 exzentrischen Querbohrung 53 durchdrungen ist. In Einbaulage sind dabei alle Höhenadapterteile 40 entweder in einer ersten Vertikallage oder einer demgegenüber um 180° gedreht auf den Kopf gestellten zweiten Vertikallage und so an den Lagerschilden 16, 17, 20, 21 angebaut, dass ihre Querbohrungen 53 in der ersten Vertikallage aller in einer unteren Horizontalebene zueinander fluchten, dagegen in der zweiten Vertikallage alle in einer oberen Horizontalebene zueinander fluchten, wobei sich die Höhendifferenz der beiden Horizontalebenen aus dem 2fachen des Abstandsmaßes y zwischen Quermittellinie 44 und Mittelachse 52 der Querbohrung 53 ergibt. Die Verbindung zwischen den Lagerschilden 16, 17 bzw. 20, 21 und den dort schon befestigten Höhenadapterteilen 40 mit den zwischen die Lagerschild-Paare 16, 17 bzw. 20, 21 eintauchenden Tragarmen 6, 7 wird über die koaxial in der jeweiligen Horizontalebene zueinander fluchtenden Bolzen 25, 26 hergestellt, von denen jeder die Querbohrungen 53 der beiden Höhenadapterteile 40 eines oberen Lagerschildpaares 16, 17 bzw. 20, 21 sowie die Querbohrung 54 im zugehörigen Tragarm 6 bzw. 7 durchdringt, aber in diesem Fall gegenüber jenem von Fig. 1 und 2 um das Dickenmaß der beiden Höhenadapterteil-Anschlussplatten 43 länger, ansonsten jedoch gleich ausgebildet ist, das heißt, einenendes ebenfalls einen durchmessergrößeren Bolzenkopf aufweist und andernendes mittels des Sicherungssplintes 29 bzw. 30 mit zwischengefügter Beilagscheibe axial in Einbaulage am zugehörigen Lagerschild-Paar 16, 17 bzw. 20, 21 gesichert ist.

Im Bereich der unteren Abstützung des Geräteträgers 4 taucht zwischen die beiden Lagerschilde 18, 19 bzw. 22, 23 eines jeden unteren Lagerschild-Paares jeweils einer der beiden Lenker 9, 10 seitengeführt ein und ist dort mit dem betreffenden Lagerschild-Paar 18, 19 bzw. 22, 23 jeweils über einen Bolzen 27 bzw. 28 verbunden. Dabei sind die Lagerschilde jedes unteren Lagerschild-Paares 18, 19 bzw. 22, 23 von zueinander in einer Horizontalebene koaxial fluchtenden Querbohrungen durchdrungen, in denen ein das vordere Ende eines Lenkers 9 bzw. 10 aufnehmender Bolzen 27 bzw. 28 aufgenommen ist. Die axiale Sicherung jedes der beiden Bolzen 27 bzw. 28 richtet sich nach der Art der Lenker 9 bzw. 10.

In den dargestellten Beispielen ist jeder der beiden gleich ausgebildeten Lenker 9, 10 durch einen Schäkelbolzen realisiert, dessen vorderer Endbereich ein Außengewinde 9' bzw. 10' aufweist, mit dem er in eine im zugehörigen Bolzen 27 bzw. 28 ausgebildete Querbohrung mit durchgehendem Innengewinde eingeschraubt ist. Dabei bestimmt die veränderbare Einschraubtiefe bzw. -position des andernendes rahmenfest abgestützten Schäkelbolzens die winkelmäßige Stellung des Geräteträgers 4.

Alternativ zu der dargestellten und vorstehend beschriebenen Art der Ausbildung als Schäkelbolzen könnten die beiden Lenker 9, 10 aber auch jeweils in sich längenvariabel und z. B. durch eine hydraulisch betätigbare Kolben-Zylinder-Einheit oder durch drei Einzelteile realisiert sein, von denen das vordere mit seinen Lageraugen auf dem geräteträgerseitigen Bolzen 27 bzw. 28 und das hintere mit einem Lagerauge auf dem lagerbockseitigen Bolzen 33 bzw. 34 gelagert wäre und die Verbindung zwischen vorderen und hinteren Einzelteil durch ein hülsenförmiges Mittelteil erfolgt, das in der einen Hälfte über eine Rechtsgewindebohrung und in der anderen Hälfte über eine Linksgewindebohrung verfügt, mit dem es auf entsprechenden Gewindezapfen der beiden äußeren Einzelteile sitzt und zur Ein- bzw. Verstellung der Geräteträger-Position verdreht werden müsste.

Der Lagerbock 11 bzw. 12, an dem das rückwärtige Ende eines Lenkers 9 bzw. 10 abgestützt ist, kann entweder direkt an einen Rahmen-Längsträger 1 oder dem dort vorderendig angeschlossenen Multifunktionslagerschild 2 oder - wie dargestellt - an einer am Multifunktionslagerschild 2 angebauten Halteplatte 31 bzw. 32 befestigt sein. Zwischen den beiden Seitenwangen eines jeden Lagerbocks 11, 12 ist das hintere nach Art eines Lagerauges ausgebildete Ende eines Lenkers 9, 10 mit seinen parallelen Seitenflächen seitengeführt aufgenommen und ebenso wie die Lagerbock-Seitenwangen von einer Querbohrung durchsetzt, die zu jener im gegenüberliegenden Lagerbock in einer Horizontalebene koaxial fluchtet. Jede dieser Querbohrungen ist von einem die Verbindung zum zugehörigen Lenker 9 bzw. 10 herstellenden Bolzen 33, 34 durchsetzt, der einerseits über einen durchmessergrößeren Bolzenkopf und andernendes über einen Sicherungssplint 35, 36 mit beigefügter Beilagscheibe axial in Einbaulage am jeweiligen Lagerbock 11 bzw. 12 gesichert ist.

Um den Durchtritt einer Abschleppstange zu dem an der Quertraverse 5 befestigten Anhänge- bzw. Abschleppmaul 3 zu ermöglichen, weist der Geräteträger 4 oben an seiner Anbauplatte 13 bzw. 15 eine Einbuchtung 37 oder Aussparung 38 oder einen Durchbruch auf. Die Quertraverse 5 kann außer als Träger für das Anhänge- bzw. Abschleppmaul 3 und die Tragarme 6, 7 auch als Träger für einen ein- oder mehrteiligen Stoßfänger 39 dienen oder selbst als Stoßfänger oder Stoßfängerteil ausgebildet sein. In diesen Fällen können die Tragarme 6, 7 auch am Stoßfänger bzw. Stoßfängerteil 39 angeordnet, z. B. angeschweißt oder angeschraubt, oder dort durch entsprechende Formgebung ausgebildet sein.

Falls der Geräteträger 4 aus einer gegebenen Lage, z. B. Vertikallage, in eine Schräglage verstellt werden soll, sind bei den dargestellten Beispielen zunächst die Sicherungssplinte 35, 36 zu lösen und dann die zugehörigen Bolzen 33, 34 aus ihren Lagerbohrungen zu ziehen. Sobald letzteres erfolgt ist, kippen die als Schäkelbolzen ausgebildeten Lenker 9, 10 in eine in Fig. 1 und 2 gestrichelt dargestellte Position, in der sie durch Verdrehen entweder tiefer in die Gewindebohrung im Bolzen 27 bzw. 28 hinein oder aus dieser weiter heraus zu schrauben sind, wodurch sich deren wirksame Abstützlänge verändert und nach ihrer Wiederverbindung mit den Lagerböcken 11, 12 über die Bolzen 33, 34 dann auch der Geräteträger 4 eine gegenüber der vorherigen Position abweichende Stellung eingenommen hat.

## Patentansprüche

1. Lastkraftwagen mit einem am vorderen Ende des Rahmens,der mit zwei Rahmen-Längsträgern ausgerustet ist, angebauten Geräteträger, **dadurch gekennzeichnet, dass** an einer die vorderen Enden der beiden Rahmen-Längsträger (1) oder dort befestigte Multifunktionslagerschilde (2) miteinander verbindenden Quertraverse (5) zwei voneinander beabstandet und höhengleich nach vorn abragende Tragarme (6, 7) angeordnet sind, an denen der Geräteträger (4) um eine Horizontalquerachse (8) schwenkbar angelenkt ist, dass der Geräteträger (4) außerdem in einer von jener der Tragarme (6, 7) verschiedenen Höhenlage mittels zweier voneinander beabstandeter Lenker (9, 10) gegenüber rahmenfesten Lagerböcken (11, 12) abgestützt ist, und dass die wirksame Abstützlänge der Lenker (9, 10) verstellbar und so der Geräteträger (4) außer in Vertikallage auch in eine leicht nach vorn oder hinten verschwenkte Schräglage einstellbar ist.

2. Lastkraftwagen nach Anspruch 1, **dadurch gekennzeichnet, dass** der Geräteträger (4) als Anschlussorgan für anzubauende Geräte eine Anbauplatte (13 bzw. 15) aufweist, die entweder direkt am Lastkraftwagen angebaut oder an einem am Lastkraftwagen angebauten Traggestell (14) angeschlossen ist.

3. Lastkraftwagen nach Anspruch 2, **dadurch gekennzeichnet, dass** der Geräteträger (4) für seinen Anbau am Lastkraftwagen an jedem Seitenbereich ein oberes und ein unteres Paar paralleler Lagerschilde (16, 17; 18, 19; 20, 21; 22, 23) aufweist, die entweder an der Rückseite (24) der Anbauplatte (13) angeordnet, insbesondere angeschweißt, oder alternativ am Traggestell (14) gegeben sind, dass zwischen die beiden Lagerschilde (16, 17 bzw. 20, 21) jedes der beiden oberen Lagerschild-Paare jeweils ein mit ihnen über einen Bolzen (25, 26) entweder unmittelbar oder mittelbar verbundener Tragarm (6, 7) seitengeführt eintaucht, und dass zwischen die beiden Lagerschilde (18, 19 bzw. 22, 23) der beiden unteren Lagerschild-Paare jeweils ein mit ihnen über einen Bolzen (27, 28) verbundener Lenker (9, 10) seitengeführt eintaucht.

4. Lastkraftwagen nach Anspruch 3, **dadurch gekennzeichnet, dass** für eine unmittelbare Verbindung jedes Bolzens (25, 26) mit einem oberen Lagerschild-Paar (16, 17 bzw. 20, 21) dessen Lagerschilde und der dazwischen aufgenommene Tragarm (6 bzw. 7) zueinander und zur Horizontalachse (8) koaxial fluchtende Querbohrungen aufweisen, die in Anbaulage des Geräteträgers (4) vom jeweiligen Bolzen (25, 26) durchquert sind.

5. Lastkraftwagen nach Anspruch 3, **dadurch gekennzeichnet, dass** für eine mittelbare und in unterschiedlichen Höhenlagen mögliche Anbringung des Geräteträgers (4) die Lagerschilde (16, 17 bzw. 20, 21) der beiden oberen Lagerschild-Paare zueinander in einer Horizontalebene fluchtende Vertikallanglöcher (41) aufweisen, in die jeweils ein mit seiner Anschlussplatte (43) mittels einer oberen und unteren Schraubverbindung (50 bzw. 51) an einem Lagerschild (16, 17, 20, 21) außen angeflanschter Höhenadapterteil (40) mit einem formmäßig angepassten Vorsprung (42) formschlüssig eintaucht, dass jedes Höhenadapterteil (40) im Bereich seines Vorsprunges (42) von einer in Bezug auf eine Quermittellinie (44) exzentrische Querbohrung (53) durchdrungen ist, dass die Höhenadapterteile (40) alle entweder in einer ersten Vertikallage oder einer gegenüber dieser um 180° gedreht auf den Kopf gestellten zweiten Vertikallage und so an den Lagerschilden (16, 17, 20, 21) angebaut sind, dass ihre Querbohrungen (53) in der ersten Vertikallage alle in einer unteren Horizontalebene zueinander fluchten, dagegen in der zweiten Vertikallage alle in einer oberen Horizontallage zueinander fluchten, wobei die Höhendifferenz zwischen beiden Horizontalebenen sich aus dem 2fachen des Abstandes (y) der Mittellinie (52) der Querbohrungen (53) zur Quermittellinie (44) eines Höhenadapterteils (40) ergibt, und dass die zur Horizontalachse (8) fluchtenden Querbohrungen (53) der beiden Höhenadapterteile (40) jedes oberen Lagerschild-Paares (16, 17 bzw. 20, 21) ebenso wie die Querbohrung (54) der dort dazwischen aufgenommenen Tragarme (6 bzw. 7) von dem jeweiligen Bolzen (25, 26) durchquert sind und solchermaßen der Geräteträger (4) wahlweise in zwei verschiedenen Höhenlagen am Lastkraftwagen anbaubar ist.

6. Lastkraftwagen nach einem der Ansprüche 4 und 5, **dadurch gekennzeichnet, dass** die die obere Lagerung des Geräteträgers (4) bewerkstelligenden Bolzen (25, 26) jeweils einerseits durch einen durchmessergrößeren Bolzenkopf und andernendes durch einen Sicherungssplint (29, 30) axial in Bezug auf das jeweils zugehörige Lagerschild-Paar (16, 17 bzw. 20, 21) gesichert sind.

7. Lastkraftwagen nach Anspruch 3, **dadurch gekennzeichnet, dass** jedes untere Lagerschild-Paar (18, 19; 22, 23) von einer zur gegenüberliegenden in einer Horizontalebene koaxial fluchtenden Bohrung durchquert ist, in der ein das vordere Ende eines Lenkers (9, 10) aufnehmender Bolzen (27, 28) gelagert ist.

8. Lastkraftwagen nach Anspruch 7, **dadurch gekennzeichnet, dass** der Lagerbock (11, 12), an dem das rückwärtige Ende eines Lenkers (9, 10) abgestützt ist, entweder direkt an einem Rahmen-Längsträger (1) oder einem dort vorderendig angeflanschten Multifunktionslagerschild (2) oder einer am Multifunktionslagerschild (2) angebauten Halteplatte (31, 32) befestigt ist.

9. Lastkraftwagen nach einem der Ansprüche 7und 8, **dadurch gekennzeichnet, dass** jeder Lenker (9, 10) durch einen Schäkelbolzen gebildet ist, dessen
a) vorderer Endbereich ein Außengewinde (9', 10') aufweist, mit dem er in eine im zugehörigen Bolzen (27, 28) ausgebildete Querbohrung mit durchgehendem Innengewinde eingeschraubt ist, wobei die veränderbare Einschraubtiefe bzw. -position des andernendes rahmenfest abgestützten Schäkelbolzens die winkelmäßige Stellung des Geräteträgers (4) bestimmt, und dessen
b) hinteres Ende nach Art eines Lagerauges ausgebildet ist, das mit seinem parallelen Seitenflächen zwischen den beiden Seitenwangen eines Lagerbockes (11, 12) aufgenommen und ebenso wie die Lagerbock-Seitenwangen von einer Querbohrung durchsetzt ist, die zu jener der gegenüberliegenden Seite koaxial fluchtet und die von einen die Verbindung herstellenden Bolzen (33, 34) durchsetzt ist, der einerseits über einen durchmessergrößeren Bolzenkopf, andernendes über einen Sicherungssplint (35, 36) axial in Einbaulage am Lagerbock (11, 12) gesichert ist.

10. Lastkraftwagen nach einem oder mehreren der Ansprüche 1 bis 9, **dadurch gekennzeichnet, dass** jeder Lenker (9, 10) in sich längenvariabel ausgebildet ist.

11. Lastkraftwagen nach Anspruch 10, **dadurch gekennzeichnet, dass** jeder Lenker (9, 10) durch eine hydraulisch betätigbare Kolben-Zylinder-Einheit gebildet ist.

12. Lastkraftwagen nach Anspruch 10, **dadurch gekennzeichnet, dass** jeder Lenker (9, 10) aus drei Teilen zusammengesetzt ist, wobei das vordere Teil vorne am Geräteträger (4) und das hintere Teil am Lagerbock (11, 12) angelenkt ist und ein verdrehbares Mittelteil über ein Innenrechts- und Innenlinksgewinde mit den beiden anderen Teilen in Verbindung steht.

13. Lastkraftwagen nach Anspruch 1, **dadurch gekennzeichnet, dass** an der Quertraverse (5) ein Anhänge- bzw. Abschleppmaul (3) befestigt ist und dass der Geräteträger (4) oben eine den Durchtritt einer Abschleppstange erlaubende Einbuchtung (37) oder eine Aussparung (38) oder einen Durchbruch aufweist.

14. Lastkraftwagen nach Anspruch 1, **dadurch gekennzeichnet, dass** die Quertraverse (5) gleichzeitig auch als Stoßfänger oder Stoßfängerteil (39) ausgebildet ist oder einen Stoßfänger oder ein Stoßfängerteil trägt.

15. Lastkraftwagen nach Anspruch 2, **dadurch gekennzeichnet, dass** die Anbauplatte (13) des Geräteträgers (4) hinsichtlich ihrer Anbaulage und ihren Anschlussmitteln für die anzubauenden Geräte bestimmten Normvorschriften gehorcht.

16. Lastkraftwagen nach Anspruch 2, **dadurch gekennzeichnet, dass** die Anbauplatte (15), wenn am Traggestell (14) angebaut, hinsichtlich ihrer Anbaulage und ihren Anschlussmitteln für die anzubauenden Geräte anderen Normvorschriften als bei Direktanbau gehorcht.

## Claims

1. Truck with an equipment carrier fitted to the front end of the frame provided with two frame longitudinal members, **characterised in that** two carrier arms (6, 7) are arranged on a transverse member (5) connecting the front ends of the two frame longitudinal members (1) or multi-function attachment plates (2) fitted there, are spaced some distance apart, are at the same height and protrude towards the front, on which carrier arms (6, 7) the equipment carrier (4) is located in such a way that it can be slewed about a horizontal transverse axis (8), that it is also kept at a height differing from that of the two carrier arms (6, 7) by means of two arms (9, 10) spaced some distance apart from each other and braced against frame-mounted bearing blocks (11, 12) and that the effective support length of the arms (9, 10) is adjustable, so that the equipment carrier (4) can be brought into a vertical position and also into a slightly forward- or rearward-inclined position.

2. Truck according to Claim 1, **characterised in that** the equipment carrier (4) features as a connecting organ for equipment to be attached an attachment plate (13 and 15) which is fitted either directly to the truck or to a carrier rack (14) fitted to the truck.

3. Truck according to Claim 2, **characterised in that** for its attachment to the truck the equipment carrier (4) has in each side area an upper and a lower pair of parallel support plates (16, 17; 18, 19; 20, 21; 22, 23) fitted either to the rear side (24) of the attachment plate (13), particularly by means of welding, or, alternatively, to the carrier rack (14), that a carrier arm (6, 7) connected via a pin (25, 26) either directly or indirectly with each of the two support plates (16, 17 and 20, 21) of each of the two upper support-plate pairs penetrates into the space between said support plates (16, 17 and 20, 21) in a laterally located manner and that an arm (9, 10) connected via a pin (27, 28) with the two support plates (18, 19 and 22, 23) of the two lower support-plate pairs penetrates into the space between said support plates (18, 19 and 22, 23) in a laterally located manner.

4. Truck according to Claim 3, **characterised in that** for the direct connection of each pin (25, 26) with an upper support-plate pair (16, 17 and 20, 21) the support plates of said pair (16, 17 and 20, 21) and the carrier arm (6 and 7) fitted in between are provided with transverse bores which are coaxially aligned to each other and to the horizontal axis (8) and through which each pin (25, 26) passes when the equipment carrier (4) is in attachment position.

5. Truck according to Claim 3, **characterised in that** for possible indirect attachment of the equipment carrier (4) in differing height positions the support plates (16, 17 and 20, 21 ) of the two upper support-plate pairs feature vertical longitudinal slots (41) which are aligned to each other in a horizontal plane and into each of which a height adapter part (40) positively penetrates with its correspondingly shaped protrusion (42), which height adapter part (40) is, with its connection plate (43), flanged to the outside of a support plate (16, 17, 20, 21) by means of an upper and a lower bolted connection (50 and 51), that each height adapter part (40) in the area of its protrusion (42) features a transverse bore (53) which is eccentric in relation to a transverse centre line (44), that the height adapter parts (40) are all attached to the support plates (16, 17, 20, 21) either in a first vertical position or in a second position turned upside down by 180° in relation to said first position in such a way, that their transverse bores (53) in the first vertical position are all aligned to each other in a lower horizontal plane, but in the second vertical position are all aligned to each other in an upper horizontal plane, the height difference between the two horizontal planes being twice the distance (y) between the centre line (52) of the transverse bores (53) and the transverse centre line (44) of a height adapter part (40), that each of the pin (25, 26) passes through the transverse bores (53) of the two height adapter parts (40) of each upper support-plate pair (16, 17 and 20, 21), which bores (53) are aligned in relation to the horizontal axis (8), and also through the transverse bore (54) of the carrier arms (6 and 7) fitted between said height adapter parts (40) and that the equipment carrier (4) thus provided can be attached to the truck in two different height positions.

6. Truck according to one of the Claims 4 and 5, **characterised in that** the one end of the pin (25, 26) ensuring the upper attachment of the equipment carrier (4) is secured by a bolt head of larger diameter and the other end is secured axially in relation to each associated support-plate pair (16, 17 and 20, 21) by means of a locking pin (29, 30).

7. Truck according to Claim 3, **characterised in that** a bore is provided in each lower support-plate pair (18, 19; 22, 23), is coaxially aligned to the opposite bore in a horizontal plane and supports a pin which takes up the front end of an arm (9, 10) is supported.

8. Truck according to Claim 7, **characterised in that** the bearing block (11, 12) on which the rear end of an arm (9, 10) is supported, is fastened either directly to a frame longitudinal member (1) or to a multi-function support plate (2) flanged on to the front end thereof or to a holding plate (31, 32) fastened to the multi-function support plate (2).

9. Truck according to Claims 7 and 8, **characterised in that** each arm (9, 10) is designed as a shackle bolt whose
a) front end area features an external thread (9', 10') with which it is screwed into a transverse bore arranged in the associated pin (27, 28) and provided with a continuous internal thread, whereby the variable screw-in depth and position of the shackle bolt, whose other end is firmly supported on the frame, determines the angular position of the equipment carrier (4) and whose
b) rear end is designed as a bearing eye which with its parallel side faces is fitted between the two side webs of a bearing block (11, 12) and, just like the bearing-block side faces, features a transverse bore coaxially aligned to that on the opposite side and in which a pin (33, 34) establishing the connection is inserted and axially secured in installation position on the bearing block (11, 12) by a bolt head of larger diameter at its one end and by a locking pin (35, 36) at its other.

10. Truck according to one or several of Claims 1 to 9, **characterised in that** each arm (9, 10) is designed so as to be variable in length.

11. Truck according to Claim 10, **characterised in that** each arm (9, 10) is designed as a piston-cylinder unit which can be hydraulically actuated.

12. Truck according to Claim 10, **characterised in that** each arm (9, 10) is composed of three parts, whereby the front part is movably located on the front side of the equipment carrier (4) and the rear part on the bearing block (11, 12) and a turnable centre part is connected with the two other parts via an internal righthand and an internal left-hand thread.

13. Truck according to Claim 1, **characterised in that** a trailing and towing jaw (3) is attached to the transverse member (5) and that the upper end of the equipment carrier (4) features a recess (37) enabling the passage of a tow bar or a cutout (38) or an orifice.

14. Truck according to Claim 1, **characterised in that** the transverse member (5) doubles as a bumper or a bumper portion (39) or carries a bumper or a portion thereof.

15. Truck according to Claim 2, **characterised in that** the attachment plate (13) of the equipment carrier (4) complies with certain standardised regulations with regard to its attachment position and connection means for the equipment to be attached.

16. Truck according to Claim 2, **characterised in that** in respect of its attachment position and its connecting means means for the equipment to be attached the attachment plate (15) complies with standardised regulations other than those for direct attachment if it is fitted to the support rack (14).

## Revendications

1. Camion doté d'un porte-outils monté à l'extrémité AV du châssis à deux longerons, **caractérisé en ce que** sur une traverse (5) reliant les extrémités AV des deux longerons (1) ou les supports multifonctions (2) fixés à ce niveau, sont disposés à distance l'un de l'autre et à la même hauteur des consoles (6, 7) en saillie vers l'avant sur lesquelles est articulé le porte-outils (4), en lui permettant de pivoter autour d'un axe transversal horizontal (8), que le porte-outils (4) est en outre étançonné par rapport à des paliers (11, 12) solidaires du châssis, à une hauteur différente de celle des consoles (6, 7), au moyen de deux bras (9, 10) distants l'un de l'autre, et que la longueur active d'étançonnement des bras (9, 10) est variable, le porte-outils (4) étant ainsi réglable non seulement dans sa position verticale mais aussi dans une position légèrement inclinée vers l'avant ou vers l'arrière.

2. Camion suivant la revendication 1, **caractérisé en ce que** le porte-outils (4) présente en tant qu'organe de fixation des outils à adapter une plaque de montage (13 ou 15) rapportée soit directement sur le camion, soit sur un cadre porteur (14) fixé au camion.

3. Camion suivant la revendication 2, **caractérisé en ce que** pour son montage sur le camion, le porte-outils (4) présente de chaque côté une paire supérieure et une paire inférieure de supports parallèles (16, 17 ; 18, 19 ; 20, 21 ; 22, 23), soit disposés, et en particulier soudés, au dos (24) de la plaque de montage (13), soit prévus en alternative sur le cadre porteur (14), qu'entre les deux supports (16, 17 ou 20, 21) de chacune des deux paires de supports supérieurs, pénètre avec guidage latéral une console (6, 7) reliée aux supports, soit directement soit indirectement, par un axe (25, 26), et qu'entre les deux supports (18, 19 ou 22, 23) de chacune des deux paires de supports inférieurs, pénètre avec guidage latéral une console (9, 10) reliée aux supports par un axe (27, 28).

4. Camion suivant la revendication 3, **caractérisé en ce qu'**en vue d'une liaison directe de chaque axe (25, 26) à l'une des paires de supports supérieurs (16, 17 ou 20, 21), les supports et la console qu'ils enserrent (6 ou 7) présentent des trous transversaux coaxiaux entre eux et avec l'axe horizontal (8), traversés par l'axe considéré (25, 26) lorsque le porte-outils (4) est monté.

5. Camion suivant la revendication 3, **caractérisé en ce qu'**en vue du montage indirect et à différentes hauteurs possibles du porte-outils (4), les supports (16, 17 ou 20, 21) des deux paires de supports supérieurs présentent des trous oblongs verticaux (41) alignés dans un plan horizontal, dans chacun desquels pénètre avec blocage, par un épaulement (42) de forme adaptée, un élément adaptateur de hauteur (40) bridé de l'extérieur à un support (16, 17, 20, 21) par sa plaque de liaison (43) au moyen de boulons supérieur et inférieur (50, 51), que chaque élément adaptateur de hauteur (40) est traversé au niveau de son épaulement (42) par un trou transversal (53) excentrique par rapport à un axe médian transversal (44), que les éléments adaptateurs de hauteur (40) sont tous montés sur les supports (16, 17, 20, 21) soit dans une première position verticale, soit tête en bas dans une seconde position verticale à 180°, de telle manière que leurs trous transversaux (53) soient tous alignés, dans un plan horizontal inférieur dans la première position verticale et dans un plan horizontal supérieur dans la seconde position verticale, la différence de hauteur entre les deux plans horizontaux étant donnée par le double de la distance (y) entre l'axe médian (52) des trous transversaux (53) et l'axe médian transversal (44) d'un élément adaptateur de hauteur (40), et que les trous transversaux (53), alignés dans l'axe horizontal (8), des deux éléments adaptateurs de hauteur (40) de chaque paire de supports supérieure (16, 17 ou 20, 21) de même que le trou transversal (54) des consoles (6 ou 7) enserrées à ce niveau sont traversés par l'axe considéré (25, 26) et que de cette manière le porte-outils (4) peut être monté à deux hauteurs différentes sur le camion.

6. Camion suivant l'une des revendications 4 et 5, **caractérisé en ce que** les axes (25, 26) assurant le support supérieur du porte-outils (4) sont retenus axialement par rapport à la paire de supports considérée (16, 17 ou 20, 21), d'une part, par une tête d'axe de diamètre supérieur à celui de l'axe et, d'autre part, par une goupille d'arrêt (29, 30).

7. Camion suivant la revendication 3, **caractérisé en ce que** chaque paire de supports inférieurs (18, 19 ; 22, 23) est traversée par un trou coaxial au trou opposé dans un plan horizontal, dans lequel est monté un axe (27, 28) recevant l'extrémité AV d'un bras (9, 10).

8. Camion suivant la revendication 7, **caractérisé en ce que** le palier (11, 12) sur lequel est étançonné l'extrémité AR d'un bras (9, 10) est fixé soit directement à un longeron
(1) du châssis, soit à un support multifonctions (2) bridé à l'extrémité AV du longeron, soit à une plaque de maintien (31, 32) montée sur le support multifonctions (2).

9. Camion suivant l'une des revendications 7 et 8, **caractérisé en ce que** chaque bras (9, 10) est constitué d'un manillon dont
a) la zone d'extrémité AV présente un filetage (9', 10') par lequel il est vissé dans un trou transversal pratiqué dans l'axe associé (27, 28) et intégralement taraudé, la profondeur et la position variables de vissage du manillon, par ailleurs solidaire du châssis à l'autre extrémité, déterminant la position angulaire du porte-outils (4), et dont
b) l'extrémité AR se présente à la manière d'un coussinet qui est enserré par ses faces latérales parallèles entre les deux joues d'un palier (11, 12) et qui, tout comme les joues du palier, est traversé par un trou transversal qui est coaxial au trou du côté opposé et qui est traversé par un axe (33, 34) réalisant la liaison, lequel est retenu axialement dans sa position de montage sur le palier (11, 12), d'une part, par une tête d'axe de diamètre supérieur à celui de l'axe et, d'autre part, par une goupille d'arrêt (35, 36).

10. Camion suivant l'une ou plusieurs des revendications 1 à 9, **caractérisé en ce que** chaque bras (9, 10) est de longueur intrinsèquement variable.

11. Camion suivant la revendication 10, **caractérisé en ce que** chaque bras (9, 10) est constitué d'une unité cylindre-piston actionnable hydrauliquement.

12. Camion suivant la revendication 10, **caractérisé en ce que** chaque bras (9, 10) se compose de trois parties, la partie AV étant articulée sur le porte-outils (4), et la partie AR sur le palier (11,12), et une partie médiane étant reliée aux deux autres parties par un taraudage respectivement à droite et à gauche.

13. Camion suivant la revendication 1, **caractérisé en ce qu'**au niveau de la traverse (5), est fixée une chape d'attelage ou de remorquage (3) et que le porte-outils (4) présente en haut une courbure (37) ou un évidement (38) ou une découpe permettant le passage d'une barre de remorquage.

14. Camion suivant la revendication 1, **caractérisé en ce que** la traverse (5) se présente aussi en même temps sous forme de pare-chocs ou d'élément de pare-chocs (39) ou qu'elle porte un pare-chocs ou un élément de pare-chocs.

15. Camion suivant la revendication 2, **caractérisé en ce que** la plaque de montage (13) du porte-outils (4) obéit à certaines normes quant à sa position de montage et à ses moyens de fixation des outils à adapter.

16. Camion suivant la revendication 2, **caractérisé en ce que** la plaque de montage (15), lorsqu'elle est montée sur le cadre porteur (14), obéit quant à sa position de montage et à ses moyens de fixation des outils à adapter à d'autres normes que celles s'appliquant au montage direct.
